(19) Europäisches Patentamt
European Patent Office
Office européen des brevets

(11) EP 4 276 149 A1

(12) **EUROPEAN PATENT APPLICATION**
published in accordance with Art. 153(4) EPC

(43) Date of publication:
**15.11.2023 Bulletin 2023/46**

(21) Application number: **21917699.7**

(22) Date of filing: **23.12.2021**

(51) International Patent Classification (IPC):
***C08L 23/10*** *(2006.01)* ***C08K 5/103*** *(2006.01)*
***C08L 23/08*** *(2006.01)* ***C08L 25/10*** *(2006.01)*

(52) Cooperative Patent Classification (CPC):
**C08K 5/103; C08L 23/08; C08L 23/10; C08L 25/10;**
Y02A 50/30

(86) International application number:
**PCT/JP2021/047859**

(87) International publication number:
**WO 2022/149479 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 JP 2021001631**
**04.11.2021 JP 2021180162**

(71) Applicant: **SUMITOMO CHEMICAL COMPANY, LIMITED**
**Tokyo 103-6020 (JP)**

(72) Inventor: **KAGEYAMA, Hitoshi**
**Ichihara-shi, Chiba 299-0195 (JP)**

(74) Representative: **Vossius & Partner**
**Patentanwälte Rechtsanwälte mbB**
**Siebertstraße 3**
**81675 München (DE)**

(54) **THERMOPLASTIC RESIN COMPOSITION AND MOLDED BODY**

(57) An object of the present invention is to provide a thermoplastic resin composition and a molded article having an antifouling property and exhibiting good antibacterial activity against Staphylococcus aureus and Escherichia coli. A thermoplastic resin composition according to the present invention contains 5 to 95 parts by mass of a propylene resin (A), 5 to 95 parts by mass of at least one selected from the group consisting of an ethylene-based copolymer rubber (B) and a copolymer (B') containing a monomer unit derived from an aromatic vinyl compound and a monomer unit derived from a conjugated diene compound, and a glycerol fatty acid ester (C), in which (C) is an ester of a fatty acid having 8 to 14 carbon atoms.

EP 4 276 149 A1

## Description

TECHNICAL FIELD

The present invention relates to a thermoplastic resin composition and a molded article.

BACKGROUND ART

Conventionally, a molded article comprising a resin composition having antibacterial activity, such as a film or a sheet, is known. For example, Patent Document 1 discloses a polyolefin-based film containing a glycerol fatty acid ester as a film having antibacterial activity against fungi of mushrooms.

PRIOR ART DOCUMENT

PATENT DOCUMENT

Patent Document 1: JP-A-2003-176384

SUMMARY OF THE INVENTION

PROBLEMS TO BE SOLVED BY THE INVENTION

However, the film containing the resin composition of Cited Document 1 does not have a sufficient antifouling property, and has a problem that it takes time and effort to clean the film after the film becomes dirty.

The present invention has been made in view of such a problem, and an object of the present invention is to provide a thermoplastic resin composition and a molded article having an antifouling property and exhibiting good antibacterial activity against Staphylococcus aureus and Escherichia coli.

MEANS FOR SOLVING THE PROBLEMS

The present invention relates to the following.

[1] A thermoplastic resin composition containing:

5 to 95 parts by mass of a propylene resin (A);
5 to 95 parts by mass of at least one selected from the group consisting of an ethylene-based copolymer rubber (B) and a copolymer (B') containing a monomer unit derived from an aromatic vinyl compound and a monomer unit derived from a conjugated diene compound, provided that the total amount of the propylene resin (A), the ethylene-based copolymer rubber (B), and the copolymer (B') is 100 parts by mass; and
a glycerol fatty acid ester (C), in which
(C) is an ester of a fatty acid having 8 to 14 carbon atoms.

[2] The thermoplastic resin composition according to [1], in which

the propylene resin (A) is at least one selected from the group consisting of a propylene homopolymer, a heterophasic polymerization material, and a propylene random copolymer, and
when the content of the propylene resin (A) is A parts by mass, the content of the ethylene-based copolymer rubber (B) is B parts by mass, the content of the copolymer (B') is B' parts by mass, the content of the propylene homopolymer is A1 parts by mass, the content of the heterophasic polymerization material is A2 parts by mass, and A + B + B' is 100 parts by mass,
(B + B')/(A1 + A2 + B + B') is 0.51 to 1.0.

[3] The thermoplastic resin composition according to [1] or [2], further containing a mineral oil (D).
[4] The thermoplastic resin composition according to [3], in which the content of (D) is 0.1% by mass or more and 60% by mass or less with respect to 100% by mass of the total amount of the propylene resin (A), the ethylene-based copolymer rubber (B), the copolymer (B'), and the mineral oil (D).
[5] The thermoplastic resin composition according to [1] to [4], further containing an antioxidant (G).
[6] The thermoplastic resin composition according to [1] to [5], further containing a crosslinking agent (E).

[7] The thermoplastic resin composition according to [1] to [6], further containing a lubricant (F).
[8] The thermoplastic resin composition according to [7], in which (F) is a fatty acid amide.
[9] The thermoplastic resin composition according to any one of [1] to [8], in which the content of (C) is 0.1% by mass or more and 10% by mass or less with respect to 100% by mass of the total amount of the propylene resin (A), the ethylene-based copolymer rubber (B), the copolymer (B'), and the mineral oil (D).
[10] The thermoplastic resin composition according to any one of [1] to [9], in which (C) is a diglycerol fatty acid ester.
[11] The thermoplastic resin composition according to [10], in which (C) is a diglycerol monofatty acid ester.
[12] A molded article comprising the thermoplastic resin composition according to any one of [1] to [11].

EFFECT OF THE INVENTION

The present invention can provide a thermoplastic resin composition and a molded article having an antifouling property and exhibiting good antibacterial activity against Staphylococcus aureus and Escherichia coli.

MODE FOR CARRYING OUT THE INVENTION

Hereinafter, an embodiment of the present invention will be described, but the present invention is not limited to the following embodiment.

[Thermoplastic resin composition]

A thermoplastic resin composition according to the present embodiment contains a propylene resin (A) (hereinafter, also simply referred to as (A)), at least one selected from the group consisting of an ethylene-based copolymer rubber (B) (hereinafter, also simply referred to as (B)) and a copolymer (B') containing a monomer unit derived from an aromatic vinyl compound and a monomer unit derived from a conjugated diene compound (hereinafter, also simply referred to as (B')), and a glycerol fatty acid ester (C) (hereinafter, also simply referred to as (C)). In addition, the thermoplastic resin composition according to the present embodiment may further contain a mineral oil (D) (hereinafter, also simply referred to as (D)), a crosslinking agent (E) (hereinafter, also simply referred to as (E)), and a lubricant (F) (hereinafter, also simply referred to as (F)).

<Propylene resin (A)>

Examples of the propylene resin (A) include a propylene homopolymer, a heterophasic polymerization material, and a propylene random copolymer. The propylene resin (A) is preferably at least one selected from the group consisting of a propylene homopolymer, a heterophasic polymerization material, and a propylene random copolymer, and more preferably a propylene homopolymer, a heterophasic polymerization material, or a propylene random copolymer. (A) may be used singly or in combination of two or more types thereof. The content of a monomer unit derived from propylene in (A) is more than 50% by mass and 100% by mass or less with respect to 100% by mass of the total amount of (A). That is, the content of a monomer unit derived from ethylene in (A) is less than 50° by mass with respect to 100% by mass of the total amount of (A).

Examples of the propylene random copolymer include:

(1) a propylene-ethylene random copolymer in which the content of a monomer unit derived from propylene is 90% by mass or more and 99.5% by mass or less and the content of a monomer unit derived from ethylene is 0.5% by mass or more and 10% by mass or less with respect to 100% by mass of the total amount of the monomer unit derived from propylene and the monomer unit derived from ethylene;
(2) a propylene-ethylene-$\alpha$-olefin random copolymer in which the content of a monomer unit derived from propylene is 81% by mass or more and 99% by mass or less, the content of a monomer unit derived from ethylene is 0.5% by mass or more and 9.5% by mass or less, and the content of a monomer unit derived from an $\alpha$-olefin having 4 or more and 10 or less carbon atoms is 0.5% by mass or more and 9.5% by mass or less with respect to 100% by mass of the total amount of the monomer unit derived from propylene, the monomer unit derived from ethylene, and the monomer unit derived from an $\alpha$-olefin having 4 or more and 10 or less carbon atoms; and
(3) a propylene-$\alpha$-olefin random copolymer in which the content of a monomer unit derived from propylene is 90% by mass or more and 99.5% by mass or less and the content of a monomer unit derived from an $\alpha$-olefin having 4 or more and 10 or less carbon atoms is 0.5% by mass or more and 10% by mass or less with respect to 100% by mass of the total amount of the monomer unit derived from propylene and the monomer unit derived from an $\alpha$-olefin having 4 or more and 10 or less carbon atoms.

Examples of the α-olefin having 4 or more and 10 or less carbon atoms in the above (1) and (2) include a linear α-olefin such as 1-butene, 1-pentene, 1-hexene, 1-octene, or 1-decene; and a branched α-olefin such as 3-methyl-1-butene or 3-methyl-1-pentene. The α-olefin having 4 or more and 10 or less carbon atoms may be used singly or in combination of two or more types thereof.

Examples of a method for manufacturing the propylene homopolymer or the propylene random copolymer include a slurry polymerization method, a solution polymerization method, a bulk polymerization method, and a gas phase polymerization method using a known complex-based catalyst such as a Ziegler-Natta catalyst, a metallocene complex, or a non-metallocene complex.

The heterophasic polymerization material is a polymerization material containing a propylene homopolymer component (I) and an ethylene copolymer component (II) having a monomer unit derived from at least one selected from the group consisting of propylene and an α-olefin having 4 or more carbon atoms and a monomer unit derived from ethylene. The content of the propylene homopolymer component (I) in the heterophasic polymerization material is preferably 70% by mass or more and 90% by mass or less, and the content of the ethylene copolymer component (II) in the heterophasic polymerization material is preferably 10% by mass or more and 30% by mass or less with respect to 100% by mass of the total amount of the heterophasic polymerization material. The content of the propylene homopolymer component (I) is more preferably 75% by mass or more and 90% by mass or less, and the content of the ethylene copolymer component (II) is more preferably 10% by mass or more and 25% by mass or less with respect to 100% by mass of the total amount of the heterophasic polymerization material.

The α-olefin having 4 or more carbon atoms in the ethylene copolymer component (II) is preferably an α-olefin having 4 or more and 20 or less carbon atoms. Examples of the α-olefin having 4 or more and 20 or less carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene. The α-olefin having 4 or more carbon atoms is more preferably an α-olefin having 4 or more and 10 or less carbon atoms, and still more preferably 1-butene, 1-hexene, or 1-octene. The α-olefin having 4 or more carbon atoms may be used singly or in combination of two or more types thereof.

The content of the monomer unit derived from ethylene in the ethylene copolymer component (II) is preferably 22% by mass or more and 90% by mass or less, more preferably 25% by mass or more and 80% by mass or less, and still more preferably 27% by mass or more and 70% by mass or less with respect to 100% by mass of the total amount of the monomer unit derived from at least one selected from the group consisting of propylene and an α-olefin having 4 or more carbon atoms and the monomer unit derived from ethylene. The content of the monomer unit derived from at least one selected from the group consisting of propylene and an α-olefin having 4 or more carbon atoms in the ethylene copolymer component (II) is preferably 20% by mass or more and 78% by mass or less, more preferably 30% by mass or more and 75% by mass or less, and still more preferably 40% by mass or more and 73% by mass or less with respect to 100% by mass of the total amount of the monomer unit derived from at least one selected from the group consisting of propylene and an α-olefin having 4 or more carbon atoms and the monomer unit derived from ethylene. Examples of a method for confirming the content of the monomer unit derived from ethylene and the content of the monomer unit derived from at least one selected from the group consisting of propylene and α-olefin having 4 or more carbon atoms from the ethylene copolymer component (II) include measurement by infrared spectroscopy. Specifically, an infrared absorption spectrum of the ethylene copolymer component (II) is measured using an infrared spectrophotometer, and the content of the unit derived from ethylene and the content of the monomer unit derived from at least one selected from the group consisting of propylene and an α-olefin having 4 or more carbon atoms are calculated according to a method described in "Characterization of polyethylene by infrared absorption spectrum (written by Takayama, Usami, and others)" or "Die Makromolekulare Chemie, 177, 461 (1976) (written by Mc Rae, M. A., MadamS, W. F., and others)".

Examples of the ethylene copolymer component (II) include a propylene-ethylene copolymer, an ethylene-1-butene copolymer, an ethylene-1-hexene copolymer, an ethylene-1-octene copolymer, a propylene-ethylene-1-butene copolymer, a propylene-ethylene-1-hexene copolymer, and a propylene-ethylene-1-octene copolymer, and the ethylene copolymer component (II) is preferably a propylene-ethylene copolymer or a propylene-ethylene-1-butene copolymer. The ethylene copolymer component (II) may be a random copolymer or a block copolymer.

Examples of a method for manufacturing the heterophasic polymerization material include a multi-stage polymerization method using a polymerization catalyst.

Examples of the polymerization catalyst used for manufacturing the heterophasic polymerization material include a Ziegler catalyst, a Ziegler-Natta catalyst, a catalyst containing an alkylaluminoxane and a transition metal compound of Group 4 of the periodic table having a cyclopentadienyl ring, and a catalyst containing a transition metal compound of Group 4 of the periodic table having a cyclopentadienyl ring, a compound that reacts with the transition metal compound to form an ionic complex, and an organoaluminum compound.

In addition, a prepolymerization catalyst may be used in the presence of the polymerization catalyst. Examples of the prepolymerization catalyst include catalysts described in JP-A-61-218606, JP-A-61-287904, JP-A-5-194685, JP-A-7-216017, JP-A-9-316147, JP-A-10-212319, and JP-A-2004-182981.

Examples of a polymerization method in the manufacture of the heterophasic polymerization material include bulk polymerization, solution polymerization, slurry polymerization, and gas phase polymerization. Examples of a non-active hydrocarbon solvent used in the solution polymerization and the slurry polymerization include propane, butane, isobutane, pentane, hexane, heptane, and octane. Two or more of these polymerization methods may be combined, and either a batch type or a continuous type may be used. The polymerization method in the manufacture of the heterophasic polymerization material is preferably continuous gas phase polymerization or bulk-gas phase polymerization in which bulk polymerization and gas phase polymerization are continuously performed.

In order to reduce a compression set of the thermoplastic resin composition, a melt flow rate (MFR) of (A) measured at a temperature of 230°C and a load of 21.18 N in accordance with JIS K7210 is preferably 60 g/10 min or less, more preferably 30 g/10 min or less, and still more preferably 10 g/10 min or less. The MFR of (A) is preferably 0.05 g/10 min or more, and more preferably 0.1 g/10 min or more. The MFR of (A) is preferably 0.05 g/10 min or more and 60 g/10 min or less, more preferably 0.1 g/10 min or more and 30 g/10 min or less, and still more preferably 0.1 g/10 min or more and 10 g/10 min or less.

Note that when two or more types of (A) are combined, an MFR of a propylene polymer having the largest content is taken as the MFR of (A).

The content of (A) contained in the thermoplastic resin composition is preferably 5 parts by mass or more, more preferably 10 parts by mass or more, still more preferably 15 parts by mass or more, and particularly preferably 20 parts by mass or more with respect to 100 parts by mass of the total amount of (A), (B), and (B') in order to improve fluidity. The content of (A) contained in the thermoplastic resin composition is preferably 95 parts by mass or less, more preferably 80 parts by mass or less, still more preferably 65 parts by mass or less, and particularly preferably 49 parts by mass or less with respect to 100 parts by mass of the total amount of (A), (B), and (B') in order to improve an antifouling property of the thermoplastic resin composition and to improve antibacterial activity against Staphylococcus aureus and Escherichia coli. The content of (A) contained in the thermoplastic resin composition is preferably 5 parts by mass or more and 95 parts by mass or less, more preferably 10 parts by mass or more and 80 parts by mass or less, still more preferably 15 parts by mass or more and 65 parts by mass or less, and particularly preferably 20 parts by mass or more and 49 parts by mass or less with respect to 100 parts by mass of the total amount of (A), (B), and (B').

A ratio of the content of (B) to the content of (A) ((B)/(A)) is preferably 0.3 or more, more preferably 1.0 or more, and still more preferably 1.5 or more in order to improve an antifouling property of the thermoplastic resin composition and to improve antibacterial activity against Staphylococcus aureus and Escherichia coli. The ratio of the content of (B) to the content of (A) is preferably 4.0 or less, more preferably 3.0 or less, and still more preferably 2.3 or less in order to improve fluidity of the thermoplastic resin composition. The ratio of the content of (B) to the content of (A) is preferably 0.3 or more and 4.0 or less, more preferably 1.0 or more and 3.0 or less, and still more preferably 1.5 or more and 2.3 or less.

A ratio of the content of (B + B') to the content of (A) ((B + B')/(A)) is preferably 0.3 or more, more preferably 1.0 or more, and still more preferably 1.5 or more in order to improve an antifouling property of the thermoplastic resin composition and to improve antibacterial activity against Staphylococcus aureus and Escherichia coli. The ratio of the content of (B + B') to the content of (A) is preferably 4.0 or less, more preferably 3.0 or less, and still more preferably 2.3 or less in order to improve fluidity of the thermoplastic resin composition. The ratio of the content of (B + B') to the content of (A) is preferably 0.3 or more and 4.0 or less, more preferably 1.0 or more and 3.0 or less, and still more preferably 1.5 or more and 2.3 or less.

When the content of the propylene resin (A) is A parts by mass, the content of the ethylene-based copolymer rubber (B) is B parts by mass, the content of the copolymer (B') is B' parts by mass, the content of the propylene homopolymer is A1 parts by mass, the content of the heterophasic polymerization material is A2 parts by mass, the content of the propylene random copolymer is A3 parts by mass, and A + B + B' is 100 parts by mass, (B + B')/(A1 + A2 + B + B') is preferably 0.51 or more, more preferably 0.55 or more, and still more preferably 0.60 or more in order to improve an antifouling property of the thermoplastic resin composition and to improve antibacterial activity against Staphylococcus aureus and Escherichia coli. (B + B')/(A1 + A2 + B + B') is preferably 1.0 or less, more preferably 0.95 or less, and still more preferably 0.90 or less in order to improve fluidity of the thermoplastic resin composition. (B + B')/(A1 + A2 + B + B') is preferably 0.51 or more and 1.0 or less, more preferably 0.55 or more and 0.95 or less, and still more preferably 0.60 or more and 0.90 or less.

The total content of (A) and (B + B') is preferably 47% by mass or more, and more preferably 57% by mass or more with respect to 100% by mass of the total mass of the thermoplastic resin composition. The total content of (A) and (B + B') is preferably 99.995% by mass or less, and more preferably 99.975% by mass or less with respect to 100% by mass of the total mass of the thermoplastic resin composition.

<Ethylene-based copolymer rubber (B)>

Examples of the ethylene-based copolymer rubber (B) include an ethylene copolymer (hereinafter, also referred to as (B-1)) having a monomer unit derived from at least one selected from the group consisting of propylene, an α-olefin having 4 or more and 10 or less carbon atoms, and a carboxylic acid vinyl ester and a monomer unit derived from ethylene, and a crosslinked product thereof (hereinafter, also referred to as (B-2)). Note that the content of the monomer unit derived from ethylene in (B) is 50% by mass or more with respect to 100% by mass of the total amount of (B), that is, is different from that in the propylene resin (A). The thermoplastic resin composition may contain only one type of the ethylene-based copolymer rubber (B) or may contain two or more types thereof.

A gel fraction of (B-2) is preferably 50% or more and 100% or less. Note that the gel fraction is determined by the following method. About 1 g of (B-2) and an empty net basket (X) made of a wire mesh (mesh opening: 400 mesh) are each weighed. (B-2) is put into the net basket, the net basket containing (B-2) is introduced into an extraction tube of a Soxhlet extractor, and 300 ml of o-xylene is introduced into a flask. Reflux is performed for 24 hours to perform an extraction treatment. After the extraction treatment, the net basket is taken out from the extraction tube, dried under reduced pressure at 100°C with a vacuum dryer, and the dried net basket (Y) is weighed. The gel fraction (% by mass) is calculated on the basis of the following formula.

$$\text{Gel fraction} = ((\text{mass of }(Y) - (\text{mass of }(X))/\text{mass of measurement sample}) \times 100$$

(B-2) can be obtained by crosslinking (B-1). Examples of a crosslinking method include a method for melt-kneading a composition containing (B-1) and the crosslinking agent (E) (hereinafter, also simply referred to as (E)). Crosslinking may be performed simultaneously when the thermoplastic resin composition of the present embodiment is manufactured. In this case, by melt-kneading a composition containing (B-1), (A), and (E), a composition containing (B-2) and (A) can be manufactured.

(B-1) is an ethylene copolymer having no crosslinked structure, and has a gel fraction of 0%.

Examples of the α-olefin having 4 or more and 10 or less carbon atoms include 1-butene, 2-methylpropylene, 1-pentene, 3-methyl-1-butene, 1-hexene, 4-methyl-1-pentene, and 1-octene. The α-olefin having 4 or more and 10 or less carbon atoms may be used singly or in combination of two or more types thereof.

Examples of the carboxylic acid vinyl ester include vinyl acetate.

The monomer unit derived from at least one selected from the group consisting of propylene, an α-olefin having 4 or more and 10 or less carbon atoms, and a carboxylic acid vinyl ester is preferably a monomer unit derived from propylene, a monomer unit derived from 1-butene, a monomer unit derived from 1-octene, or a monomer unit derived from vinyl acetate.

(B-1) may have, in addition to the monomer unit derived from at least one selected from the group consisting of propylene, an α-olefin having 4 or more and 10 or less carbon atoms, and a carboxylic acid vinyl ester and a monomer unit derived from ethylene, a monomer unit derived from another monomer. Examples of the other monomer include: a conjugated diene having 4 or more and 8 or less carbon atoms, such as 1,3-butadiene, 2-methyl-1,3-butadiene, 1,3-pentadiene, or 2,3-dimethyl-1,3-butadiene; a non-conjugated diene having 5 or more and 15 or less carbon atoms, such as dicyclopentadiene, 5-ethylidene-2-norbornene, 1,4-hexadiene, 1,5-dicyclooctadiene, 7-methyl-1,6-octadiene, or 5-vinyl-2-norbornene; an unsaturated carboxylic acid ester such as methyl acrylate, ethyl acrylate, butyl acrylate, methyl methacrylate, or ethyl methacrylate; and an unsaturated carboxylic acid such as acrylic acid or methacrylic acid. The other monomer is preferably a non-conjugated diene having 5 or more and 15 or less carbon atoms, and more preferably 5-ethylidene-2-norbornene or dicyclopentadiene. (B-1) may contain two or more types of monomer units derived from the other monomers.

In (B-1), the content of the monomer unit derived from ethylene is preferably 50% by mass or more and 95% by mass or less, and more preferably 55% by mass or more and 85% by mass or less with respect to 100% by mass of the total amount of the monomer unit derived from ethylene and the monomer unit derived from at least one selected from the group consisting of propylene, an α-olefin having 4 or more and 10 or less carbon atoms, and a carboxylic acid vinyl ester. In (B-1), the content of the monomer unit derived from at least one selected from the group consisting of propylene, an α-olefin having 4 or more and 10 or less carbon atoms, and a carboxylic acid vinyl ester is preferably 5% by mass or more and 50% by mass or less, and more preferably 15% by mass or more and 45% by mass or less with respect to 100% by mass of the total amount of the monomer unit derived from ethylene and the monomer unit derived from at least one selected from the group consisting of propylene, an α-olefin having 4 or more and 10 or less carbon atoms, and a carboxylic acid vinyl ester.

The total of the content of the monomer unit derived from ethylene and the content of the monomer unit derived from at least one selected from the group consisting of propylene, an α-olefin having 4 or more and 10 or less carbon atoms, and a carboxylic acid vinyl ester is preferably 55% by mass or more, and more preferably 65% by mass or more with respect to 100% by mass of the total amount of (B-1).

Examples of a method for confirming the content of the monomer unit derived from ethylene and the content of the monomer unit derived from at least one selected from the group consisting of propylene, an α-olefin having 4 or more and 10 or less carbon atoms, and a carboxylic acid vinyl ester from (B-1) include measurement by infrared spectroscopy. Specifically, an infrared absorption spectrum of (B-1) is measured using an infrared spectrophotometer, and the content of the monomer unit derived from ethylene and the content of the monomer unit derived from at least one selected from the group consisting of propylene, an α-olefin having 4 or more and 10 or less carbon atoms, and a carboxylic acid vinyl ester are calculated according to a method described in "Characterization of polyethylene by infrared absorption spectrum (written by Takayama, Usami, and others)" or "Die Makromolekulare Chemie, 177, 461 (1976) (written by Mc Rae, M. A., MadamS, W. F., and others)".

When (B-1) has, in addition to the monomer unit derived from ethylene and the monomer unit derived from at least one selected from the group consisting of propylene, an α-olefin having 4 or more and 10 or less carbon atoms, and a carboxylic acid vinyl ester, a monomer unit derived from another monomer, the content of the monomer unit derived from the other monomer is preferably 45% by mass or less, and more preferably 35% by mass or less with respect to 100% by mass of the total amount of (B-1).

Examples of a method for confirming the content of the monomer unit derived from the other monomer from (B-1) include measurement by infrared spectroscopy. Specifically, a peak intensity of a peak derived from the other monomer in (B-1) is measured using an infrared spectrophotometer, and the content of the monomer unit derived from the other monomer in (B-1) is calculated from the peak intensity.

Examples of (B-1) include an ethylene-propylene copolymer, an ethylene-1-butene copolymer, an ethylene-1-hexene copolymer, an ethylene-1-octene copolymer, an ethylene-propylene-1-butene copolymer, an ethylene-propylene-1-hexene copolymer, an ethylene-propylene-1-octene copolymer, an ethylene-propylene-5-ethylidene-2-norbornene copolymer, an ethylene-propylenedicyclopentadiene copolymer, an ethylene-propylene-1,4-hexadiene copolymer, an ethylene-propylene-5-vinyl-2-norbornene copolymer, and an ethylene-vinyl acetate copolymer. (B-1) is preferably an ethylene-propylene copolymer, an ethylene-1-butene copolymer, an ethylene-1-octene copolymer, an ethylene-propylene-5-ethylidene-2-norbornene copolymer, or an ethylene-vinyl acetate copolymer. (B-1) may be used singly or in combination of two or more types thereof. When two or more types of (B-1) are used in combination, it is preferable to select two or more types from the group consisting of an ethylene-propylene copolymer, an ethylene-1-butene copolymer, an ethylene-1-octene copolymer, an ethylene-propylene-5-ethylidene-2-norbornene copolymer, and an ethylene-vinyl acetate copolymer, and it is more preferable to contain an ethylene-propylene-5-ethylidene-2-norbornene copolymer and an ethylene-vinyl acetate copolymer. In order to reduce the compression set of the thermoplastic resin composition, a ratio of an ethylene-vinyl acetate copolymer to an ethylene-propylene-5-ethylidene-2-norbornene copolymer is preferably 2 or less, more preferably 1 or less, and still more preferably 0.5 or less.

Mooney viscosity ($ML_{1+4}$ 125°C) of (B-1) measured at 125°C is preferably, for example, 20 or more and 350 or less.

The Mooney viscosity ($ML_{1+4}$ 125°C) is measured in accordance with JIS K6300. Note that when (B-1) and the mineral oil (D) described later are mixed in advance, the Mooney viscosity ($ML_{1+4}$ 125°C) of (B-1) can be calculated from the following formula (1).

$$\log(ML1/ML2) = 0.0066(\triangle PHR) \quad (1)$$

ML1: Mooney viscosity of (B-1)
ML2: Mooney viscosity of mixture of (B-1) and (D)
△PHR: Content of (D) with respect to 100 parts by mass of (B-1)

Intrinsic viscosity of (B-1) measured in tetralin at 135°C is preferably 1 dl/g or more, more preferably 2 dl/g or more, and still more preferably 4 dl/g or more in order to improve antibacterial activity of the thermoplastic resin composition against Staphylococcus aureus and Escherichia coli. The intrinsic viscosity of (B-1) is preferably 8 dl/g or less, more preferably 6 dl/g or less, and still more preferably 5.5 dl/g or less in order to improve fluidity of the thermoplastic resin composition. The intrinsic viscosity of (B-1) is preferably 1 dl/g or more and 8 dl/g or less, more preferably 2 dl/g or more and 6 dl/g or less, and still more preferably 4 dl/g or more and 5.5 dl/g or less.

The intrinsic viscosity is a value determined by measuring reduced viscosity in tetralin at 135°C using an Ubbelohde viscometer and performing an extrapolation method according to a calculation method described on page 491 of "Polymer solution, Polymer Experiment 11" (published by KYORITSU SHUPPAN CO., LTD., 1982).

Examples of a method for manufacturing (B-1) include a known polymerization method such as a slurry polymerization method, a solution polymerization method, a bulk polymerization method, or a gas phase polymerization method using a known complex-based catalyst such as a Ziegler-Natta-based catalyst, a metallocene-based complex, or a non-metallocene complex such as a post-Kaminsky catalyst.

The content of (B) contained in the thermoplastic resin composition is preferably 5 parts by mass or more, more preferably 20 parts by mass or more, still more preferably 35 parts by mass or more, and particularly preferably 51 parts by mass or more with respect to 100 parts by mass of the total amount of (A), (B), and (B') in order to improve an antifouling property of the thermoplastic resin composition and to improve antibacterial activity against Staphylococcus aureus and Escherichia coli. The content of (B) is preferably 95 parts by mass or less, more preferably 80 parts by mass or less, still more preferably 75 parts by mass or less, and particularly preferably 70 parts by mass or less with respect to 100 parts by mass of the total amount of (A), (B), and (B') in order to improve fluidity of the thermoplastic resin composition. The content of (B) is preferably 5 parts by mass or more and 95 parts by mass or less, more preferably 20 parts by mass or more and 80 parts by mass or less, still more preferably 35 parts by mass or more and 75 parts by mass or less, and particularly preferably 51 parts by mass or more and 70 parts by mass or less with respect to 100 parts by mass of the total amount of (A), (B), and (B'). Note that the content of (B) is the total content of (B-1) and (B-2). The mass of (B-2) can be regarded as the same as the mass of (B-1) used as a raw material.

<Copolymer (B') containing monomer unit derived from aromatic vinyl compound and monomer unit derived from conjugated diene compound>

Examples of the copolymer (B') containing a monomer unit derived from an aromatic vinyl compound and a monomer unit derived from a conjugated diene compound include an aromatic vinyl compound-conjugated diene compound polymer, an aromatic vinyl compound-conjugated diene compound-aromatic vinyl compound polymer, and hydrogenated products thereof. Among these compounds, a hydrogenated product of an aromatic vinyl compound-conjugated diene compound-aromatic vinyl compound polymer is preferable.

Examples of the aromatic vinyl compound in (B') include styrene, $\alpha$-methylstyrene, o-, m-, p-methylstyrene, 1,3-dimethylstyrene, vinylxylene, monochlorostyrene, dichlorostyrene, monobromostyrene, dibromostyrene, ethylstyrene, and vinylnaphthalene, and styrene is preferable.

Examples of the conjugated diene compound in (B') include butadiene, isoprene, 2,3-dimethyl-1,3-butadiene, 2-neopentyl-1,3-butadiene, 2-chloro-1,3-butadiene, and 2-cyano-1,3-butadiene, and butadiene or isoprene is preferable.

The content of the monomer unit derived from an aromatic vinyl compound is preferably 10% by mass or more and 50% by mass or less, more preferably 15% by mass or more and 45% by mass or less, and still more preferably 20% by mass or more and 40% by mass or less in order to make a die less likely to be contaminated while the thermoplastic resin composition is molded and to improve tensile properties and appearance of a molded article. Note that the total amount of the copolymer having the monomer unit derived from an aromatic vinyl compound and the monomer unit derived from a conjugated diene compound is 100% by mass. Note that the content of the monomer unit derived from an aromatic vinyl compound can be determined by 1H-NMR measurement.

The content of the monomer unit derived from a conjugated diene compound is preferably 50% by mass or more and 90% by mass or less, more preferably 55% by mass or more and 85% by mass or less, and still more preferably 60% by mass or more and 80% by mass or less. Note that the total amount of the copolymer having the monomer unit derived from an aromatic vinyl compound and the monomer unit derived from a conjugated diene compound is 100% by mass. The content of the monomer unit derived from a conjugated diene compound can be determined by 1H-NMR measurement.

A hydrogenation ratio of a hydrogenated product in (B') is preferably 80% or more, and more preferably 90% or more. Note that the amount of a double bond of the monomer unit derived from a conjugated diene compound in the copolymer before hydrogenation is 100%.

Examples of a method for manufacturing (B') include a method described in JP-B-40-23798. Examples of a method for hydrogenating the copolymer having the monomer unit derived from an aromatic vinyl compound and the monomer unit derived from a conjugated diene compound include methods described in JP-B-42-8704, JP-B-43-6636, JP-A-59-133203, and JP-A-60-79005. As the copolymer having the monomer unit derived from an aromatic vinyl compound and the monomer unit derived from a conjugated diene compound, a commercially available product such as "KRATON-G" manufactured by Kraton Corporation, "SEPTON" manufactured by Kuraray Co., Ltd., or "Tuftec" manufactured by Asahi Kasei Corporation may be used.

The content of (B') contained in the thermoplastic resin composition is preferably 5 parts by mass or more, more preferably 20 parts by mass or more, still more preferably 35 parts by mass or more, and particularly preferably 51 parts by mass or more with respect to 100 parts by mass of the total amount of (A), (B), and (B') in order to improve an antifouling property of the thermoplastic resin composition and to improve antibacterial activity against Staphylococcus aureus and Escherichia coli. The content of (B') is preferably 95 parts by mass or less, more preferably 80 parts by mass or less, still more preferably 75 parts by mass or less, and particularly preferably 70 parts by mass or less with respect to 100 parts by mass of the total amount of (A), (B), and (B') in order to improve fluidity of the thermoplastic resin composition. The content of (B') is preferably 5 parts by mass or more and 95 parts by mass or less, more preferably 20 parts by mass or more and 80 parts by mass or less, still more preferably 35 parts by mass or more and 75 parts by mass or less, and particularly preferably 51 parts by mass or more and 70 parts by mass or less with respect to 100 parts by mass of the total amount of (A), (B), and (B').

The total content of (B) and (B') contained in the thermoplastic resin composition is preferably 5 parts by mass or more, more preferably 20 parts by mass or more, still more preferably 35 parts by mass or more, and particularly preferably 51 parts by mass or more with respect to 100 parts by mass of the total amount of (A), (B), and (B') in order to improve an antifouling property of the thermoplastic resin composition and to improve antibacterial activity against Staphylococcus aureus and Escherichia coli. The total content of (B) and (B') is preferably 95 parts by mass or less, more preferably 80 parts by mass or less, still more preferably 75 parts by mass or less, and particularly preferably 70 parts by mass or less with respect to 100 parts by mass of the total amount of (A), (B), and (B') in order to improve fluidity of the thermoplastic resin composition. The total content of (B) and (B') is preferably 5 parts by mass or more and 95 parts by mass or less, more preferably 20 parts by mass or more and 80 parts by mass or less, still more preferably 35 parts by mass or more and 75 parts by mass or less, and particularly preferably 51 parts by mass or more and 70 parts by mass or less with respect to 100 parts by mass of the total amount of (A), (B), and (B').

<Glycerol fatty acid ester (C)>

The glycerol fatty acid ester (C) is an ester of a fatty acid having 8 to 14 carbon atoms. Specific examples of the fatty acid having 8 to 14 carbon atoms include caprylic acid, capric acid, lauric acid, and myristic acid. Examples of a fatty acid ester constituting the glycerol fatty acid ester include one fatty acid ester (hereinafter, also referred to as "glycerol monofatty acid ester"), two fatty acid esters (hereinafter, also referred to as "glycerol difatty acid ester"), and three fatty acid esters (hereinafter, also referred to as "glycerol trifatty acid ester"). Among these esters, the glycerol fatty acid ester is preferably to include one fatty acid ester, glycerol monofatty acid ester.

A fatty acid having less than 8 carbon atoms is not preferable because of causing a strong skin irritation or providing a strong unpleasant odor. A fatty acid having more than 14 carbon atoms does not exhibit good antibacterial activity against Staphylococcus aureus and Escherichia coli. A fatty acid may be used singly or in combination of two or more types thereof.

Examples of a glycerol constituting the glycerol fatty acid ester used in the present embodiment include monoglycerol, diglycerol, triglycerol, tetraglycerol, and pentaglycerol. Among these compounds, the glycerol is preferably diglycerol. That is, the glycerol fatty acid ester (C) is preferably a diglycerol fatty acid ester.

Specific examples of the glycerol fatty acid ester (C) include monoglycerol monocaprylate, monoglycerol monocaprate, monoglycerol monolaurate, monoglycerol monomyristyrate, diglycerol monocaprylate, diglycerol monocaprate, diglycerol monolaurate, diglycerol monomyristyrate, triglycerol monocaprylate, triglycerol monocaprate, triglycerol monolaurate, triglycerol monomyristyrate, tetraglycerol monocaprylate, tetraglycerol monocaprate, tetraglycerol monolaurate, tetraglycerol monomyristyrate, pentaglycerol monocaprylate, pentaglycerol monocaprate, pentaglycerol monolaurate, and pentaglycerol monomyristyrate. Among these compounds, the glycerol fatty acid ester (C) is preferably a diglycerol monofatty acid ester, and specifically, is preferably diglycerol monocaprylate, diglycerol monocaprate, or diglycerol monomyristyrate. In addition, the glycerol fatty acid ester (C) preferably has a monolaurate structure, and specifically, is preferably diglycerol monolaurate, triglycerol monolaurate, tetraglycerol monolaurate, or pentaglycerol monolaurate.

A ratio of the content of (C) to the content of (B) ((C)/(B)) is preferably 0.025 or more, more preferably 0.03 or more, and still more preferably 0.04 or more in order to improve an antifouling property and to improve antibacterial activity against Staphylococcus aureus and Escherichia coli. The ratio of the content of (C) to the content of (B) is preferably 0.5 or less, more preferably 0.2 or less, and still more preferably 0.1 or less. The ratio of the content of (C) to the content of (B) is preferably 0.025 or more and 0.5 or less, more preferably 0.03 or more and 0.2 or less, and still more preferably 0.04 or more and 0.1 or less.

A ratio of the content of (C) to the content of (B + B') ((C)/(B + B')) is preferably 0.025 or more, more preferably 0.03 or more, and still more preferably 0.04 or more in order to improve an antifouling property and to improve antibacterial activity against Staphylococcus aureus and Escherichia coli. The ratio of the content of (C) to the content of (B + B') is preferably 0.5 or less, more preferably 0.2 or less, and still more preferably 0.1 or less. The ratio of the content of (C) to the content of (B + B') is preferably 0.025 or more and 0.5 or less, more preferably 0.03 or more and 0.2 or less, and still more preferably 0.04 or more and 0.1 or less.

The content of (C) contained in the thermoplastic resin composition is preferably 0.00001% by mass or more, preferably 0.0001% by mass or more, preferably 0.001% by mass or more, preferably 0.01% by mass or more, preferably 0.1% by mass or more, more preferably 0.5% by mass or more, and still more preferably 1% by mass or more with respect to 100% by mass of the total amount of (A), (B), (B'), and (D) in order to improve an antifouling property and to improve antibacterial activity against Staphylococcus aureus and Escherichia coli. The content of (C) contained in the thermoplastic resin composition is preferably 10% by mass or less, more preferably 5° by mass or less, and still more preferably 3% by mass or less with respect to 100% by mass of the total amount of (A), (B), (B'), and (D). The content of (C) contained in the thermoplastic resin composition is preferably 0.1% by mass or more and 10% by mass or less, more preferably 0.5% by mass or more and 5% by mass or less, and still more preferably 1% by mass or more and 3% by mass or less with respect to 100 parts by mass of the total amount of (A), (B), (B'), and (D). Note that, in a case where the thermoplastic resin composition does not contain (D), the above content is a content with respect to 100% by mass of the total amount of (A), (B), and (B').

(C) contained in the thermoplastic resin composition may be directly added to a kneader in a viscous liquid state, or may be heated to make (C) liquid with high fluidity, and the highly fluid liquid may be added to a kneader. In addition, the content of (C) in the thermoplastic resin composition may be adjusted by kneading (C) and a part or the whole of at least one selected from the group consisting of the propylene resin (A), the ethylene-based copolymer rubber (B), and the copolymer (B') containing a monomer unit derived from an aromatic vinyl compound and a monomer unit derived from a conjugated diene compound to prepare a masterbatch having a high concentration, adding the masterbatch to a kneader together with another thermoplastic resin composition, and kneading the mixture. It is more preferable to heat (C) to make (C) liquid with high fluidity and add the highly fluidity liquid to the thermoplastic resin composition, or to form a masterbatch and add the masterbatch from a viewpoint of productivity.

<Mineral oil (D)>

The mineral oil (D) is a high-boiling fraction of petroleum. Examples of (D) include an aromatic mineral oil, a naphthene-based mineral oil, and a paraffin-based mineral oil. (D) is preferably a paraffin-based mineral oil. (D) preferably has an average molecular weight of 300 or more and 1500 or less and a pour point of 0°C or lower.

The content of (D) in the thermoplastic resin composition is preferably 0.1% by mass or more, and more preferably 30% by mass or more with respect to 100% by mass of the total amount of (A), (B), (B'), and (D) in order to improve fluidity and an antifouling property of the thermoplastic resin composition and to improve antibacterial activity against Staphylococcus aureus and Escherichia coli, and is preferably 60% by mass or less, and more preferably 50% by mass or less with respect to 100% by mass of the total amount of (A), (B), (B'), and (D) in order to suppress bleeding of the mineral oil. The content of (D) in the thermoplastic resin composition is preferably 0.1% by mass or more and 60% by mass or less, and more preferably 30% by mass or more and 50% by mass or less with respect to 100% by mass of the total amount of (A), (B), (B'), and (D).

<Crosslinking agent (E)>

Examples of the crosslinking agent (E) include an organic peroxide, a sulfur compound, and an alkylphenol resin. (E) is preferably an organic peroxide.

Examples of the organic peroxide include ketone peroxides, diacyl peroxides, hydroperoxides, dialkyl peroxides, peroxyketals, alkyl peresters, percarbonates, peroxydicarbonates, and peroxyesters.

Specific examples of the organic peroxide include dicumyl peroxide, 2,5-dimethyl-2,5-di(t-butylperoxy) hexane, 2,5-dimethyl-2,5-di(t-butylperoxy) hexyne, 1,3-bis(t-butylperoxyisopropyl) benzene, t-butylcumyl peroxide, di-t-butyl peroxide, 2,2,4-trimethylpentyl-2-hydroperoxide, diisopropylbenzohydroperoxide, cumene peroxide, t-butyl peroxide, 1,1-di(t-butylperoxy) 3,5,5-trimethylcyclohexane, 1,1-di-t-butylperoxycyclohexane, isobutyl peroxide, 2,4-dichlorobenzoyl peroxide, o-methylbenzoyl peroxide, bis-3,5,5-trimethylhexanoyl peroxide, lauroyl peroxide, benzoyl peroxide, and p-chlorobenzoyl peroxide. The organic peroxide may be used singly or in combination of two or more types thereof.

(E) may be used in combination with a crosslinking aid in order to increase the degree of crosslinking of the above (B-2). The crosslinking aid is preferably a compound having two or more double bonds. Examples of the crosslinking aid include a peroxide crosslinking aid such as N,N-m-phenylene bismaleimide, toluylene bismaleimide, p-quinone dioxime, nitrosobenzene, diphenylguanidine, or trimethylolpropane, divinylbenzene, triallyl cyanurate, triallyl isocyanurate, ethylene glycol dimethacrylate, polyethylene glycol dimethacrylate, trimethylolpropane trimethacrylate, and allyl methacrylate, and trimethylolpropane trimethacrylate is preferable.

The blending amount of (E) is preferably 0.01% by mass or more and 10% by mass or less, more preferably 0.1% by mass or more and 5° by mass or less, and still more preferably 0.2% by mass or more and 3% by mass or less with respect to 100 parts by mass of the total amount of (A), (B-1), and (D).

When a crosslinking aid is used together with (E), the blending amount of the crosslinking aid is preferably 0.01% by mass or more and 10% by mass or less, and more preferably 0.1% by mass or more and 2% by mass or less with respect to 100% by mass of the total amount of (A), (B-1), and (D).

(E) is mainly used for a crosslinking reaction between (A) and (B). Therefore, (E) may be added at any timing before and after addition of other additives as long as the timing is after addition of the component (B) or (B'). However, in order to obtain a molded article having a uniform appearance, it is preferable to add (E) and add (C) after the crosslinking reaction proceeds.

<Lubricant (F)>

Examples of the lubricant (F) include a fatty acid amide, a silicone oil, a higher alcohol, and an aliphatic ester excluding the component (C). (F) is preferably a fatty acid amide. Note that (F) may be used singly or in combination of two or more types thereof.

Examples of the fatty acid amide include: a fatty acid monoamide such as lauric acid amide, myristic acid amide, palmitic acid amide, stearic acid amide, behenic acid amide, oleic acid amide, or erucic acid amide; and a fatty acid bisamide such as ethylene bis-stearic acid amide, ethylene bis-behenic acid amide, ethylene bis-oleic acid amide, ethylene bis-erucic acid amide, or ethylene bis-lauric acid amide, and the preferable fatty acid amide is oleic acid amide, stearic acid amide, or erucic acid amide.

Examples of the silicone oil include dimethylpolysiloxane, methylphenylpolysiloxane, methylhydrodiene polysiloxane, $\alpha$-$\omega$bis(3-hydroxypropyl) polydimethylsiloxane, polyoxyalkylene (C2 to C4) dimethylpolysiloxane, and a condensate of polyorgano (C1 to C2 alkyl and/or phenyl) siloxane and polyalkylene (C2 to C3) glycol.

Examples of the fatty acid ester excluding the component (C) include a fatty acid sorbitan ester, a sucrose fatty acid ester, a glycerol acetic acid fatty acid ester, and a glycerol fatty acid ester having an ester of a fatty acid having 16 or more carbon atoms.

Examples of the fatty acid sorbitan ester include sorbitan monostearate, sorbitan monoisostearate, sorbitan sesquistearate, sorbitan sesquiisostearate, sorbitan tristearate, sorbitan sesquioleate, sorbitan monooleate, sorbitan trioleate, and sorbitan monolaurate, and the fatty acid sorbitan is preferably sorbitan monostearate.

Examples of the glycerol fatty acid ester having an ester of a fatty acid having 16 or more carbon atoms include monoglycerol stearate, monoglycerol oleate, monoglycerol linoleate, monoglycerol palmitate, diglycerol stearate, diglycerol oleate, diglycerol linoleate, diglycerol palmitate, triglycerolstearate, triglycerol oleate, triglycerol linoleate, and triglycerol palmitate, and the glycerol fatty acid ester having an ester of a fatty acid having 16 or more carbon atoms is preferably monoglycerol stearate or monoglycerol palmitate.

The blending amount of (F) is preferably 0.01% by mass or more and 1% by mass or less, more preferably 0.02% by mass or more and 0.5% by mass or less, and still more preferably 0.03% by mass or more and 0.2% by mass or less with respect to 100 parts by mass of the total amount of (A), (B-1), and (D).

<Antioxidant (G)>

Examples of the antioxidant (G) include a phenol-based antioxidant, a sulfur-based antioxidant, a phosphorus-based antioxidant, a lactone-based antioxidant, and a vitamin-based antioxidant. The antioxidant may be used singly or in combination of two or more types thereof.

Examples of the phenol-based antioxidant include 2,6-di-tert-butyl-p-cresol, tetrakis[methylene-3-(3,5-di-tert-butyl-4-hydroxyphenyl) propionate] methane, 3,9-bis{2-[3-(3-tert-butyl-4-hydroxy-5-methylphenyl) propionyloxy]-1,1-dimethylethyl}-2,4,8,10-tetraoxaspiro [5.5] undecane, $\alpha$-tocophenols, and 2-tert-butyl-6-methyl-4-{3-[(2,4,8,10-tetra-tert-butyldibenzo [d,f] [1,3,2] dioxaphosphepin-6-yl) oxy] propyl} phenol which is a phenol phosphorus-based antioxidant having a phenol skeleton, and the phenol-based antioxidant is preferably tetrakis[methylene-3-(3,5-di-tert-butyl-4-hydroxyphenyl) propionate] methane, 3,9-bis{2-[3-(3-tert-butyl-4-hydroxy-5-methylphenyl) propionyloxy]-1,1-dimethylethyl}-2,4,8,10-tetraoxaspiro [5.5] undecane, or 2-tert-butyl-6-methyl-4-{3-[(2,4,8,10-tetra-tert-butyldibenzo [d,f] [1,3,2] dioxaphosphepin-6-yl) oxy] propyl} phenol.

Examples of the phosphorus-based antioxidant include tris(2,4-di-tert-butylphenyl) phosphite, trisononylphenyl phosphite, diphenylisooctyl phosphite, 2,2'-methylenebis(4,6-di-tert-butylphenyl) octyl phosphite, diphenylisodecyl phosphite, diphenylmono(tridecyl) phosphite, phenyldiisodecyl phosphite, phenyldi(tridecyl) phosphite, tris(2-ethylhexyl) phosphite, tris(isodecyl) phosphite, tris(tridecyl) phosphite, bis(2,4-di-tert-butylphenyl) pentaerythritol diphosphite, and tris(2,4-di-tert-butylphenyl) phosphite, and bis(2,4-di-tert-butylphenyl) pentaerythritol diphosphite and tris(2,4-di-tert-butylphenyl) phosphite are preferable.

The blending amount of (G) is preferably 0.01% by mass or more and 1% by mass or less, more preferably 0.02% by mass or more and 0.5% by mass or less, and still more preferably 0.03% by mass or more and 0.2% by mass or less with respect to 100 parts by mass of the total amount of (A), (B-1), and (D).

<Other component>

The thermoplastic resin composition of the present embodiment may contain, in addition to the above (A) to (G), another additive and another thermoplastic resin.

Examples of the other additive include an inorganic filler, an organic filler, an ultraviolet absorber, a heat stabilizer, a light stabilizer, an antistatic agent, a nucleating agent, a pigment, an adsorbent, a metal chloride, a silicone compound, an antibacterial agent, an antiviral agent, a moss-proofing agent, and an alga-proofing agent. Note that the antibacterial agent is a compound that prevents propagation of bacteria such as Escherichia coli and Staphylococcus aureus.

Examples of the inorganic filler include talc, calcium carbonate, and calcined kaolin.

Examples of the organic filler include fibers, wood flour, and cellulose powder.

Examples of the ultraviolet absorber include a benzotriazole-based ultraviolet absorber, a tridiaminebased ultraviolet absorber, an anilide-based ultraviolet absorber, and a benzophenone-based ultraviolet absorber.

Examples of the light stabilizer include a hindered amine-based light stabilizer and a benzoate-based light stabilizer.

Examples of the metal chloride include iron chloride and calcium chloride.

Examples of the other thermoplastic resin include an ethylene polymer containing a monomer unit derived from ethylene in an amount of more than 95% by mass and 100° by mass or less with respect to 100% by mass of the total amount of the ethylene polymer.

Examples of the ethylene polymer containing a monomer unit derived from ethylene in an amount of more than 95% by mass and 100% by mass or less include an ethylene homopolymer and a copolymer having a monomer unit derived from ethylene and a monomer unit derived from at least one selected from the group consisting of propylene and an $\alpha$-olefin having 4 or more and 10 or less carbon atoms.

The content of the other thermoplastic resin is preferably 40% by mass or less with respect to 100% by mass of the total mass of the thermoplastic resin composition.

The thermoplastic resin composition according to the present embodiment can be obtained by melt-kneading (A), (B), and (C), and as necessary, (D), (E), (F), and (G) and other components.

Examples of a melt-kneading apparatus include an open type mixing roll, a non-open type Banbury mixer, an extruder, a kneader, and a continuous mixer, and the melt-kneading apparatus is preferably a non-open type apparatus. In addition, all the components to be kneaded may be collectively melt-kneaded, or after some components are kneaded, the remaining components may be added and melt-kneaded, and melt-kneading may be performed once or more. Temperature during the melt-kneading is preferably 150°C or higher and 250°C or lower, and time during the melt-kneading is preferably 30 seconds or more and 30 minutes or less. The components to be kneaded may be added in any order or may be added simultaneously.

[Molded article]

The molded article according to the present embodiment contains the thermoplastic resin composition described above.

The molded article can be molded by, for example, a known molding method such as extrusion molding, calender molding, or injection molding using an ordinary apparatus used for molding a thermoplastic resin.

The molded article according to the present embodiment can be used for, for example, bathroom and bathtub parts, rubber-related parts, automobile parts, electrical parts, home appliance parts, furniture parts, building parts, footwear parts, sports equipment parts, medical and nursing care-related products, and other industrial materials.

Note that the thermoplastic resin composition and the molded article according to the present embodiment are not limited to the above embodiment, and various modifications can be made without departing from the gist of the present invention. In addition, the configurations, methods, and the like of embodiments other than the above may be arbitrarily adopted and combined, and the configuration, method, and the like according to the above one embodiment may be applied to the configurations, methods, and the like according to embodiments other than the above.

Examples

Hereinafter, the present invention will be described more specifically with reference to Examples, but the present invention is not limited to these Examples. Note that measured values of items in Examples and Comparative Examples were measured by the following methods.

(Physical property measurement method)

[Mooney viscosity ($ML_{1+4}$ 125°C)]

Measurement was performed according to JIS K6300. Note that when the component (B1) and the component (D) are mixed in advance, the Mooney viscosity ($ML_{1+9}$ 125°C) of the component (B1) was calculated from the following formula (1) .

$$\log(ML1/ML2) = 0.0066(\triangle PHR) \quad (1)$$

ML1: Mooney viscosity of component (B1)
ML2: Mooney viscosity of mixture of component (B1) and component (D1)
△PHR: Content of component (D) with respect to 100 parts by mass of component (B1)

[Content of monomer unit derived from ethylene, content of monomer unit derived from propylene, and content of monomer unit derived from 5-ethylidene-2-norbornene (unit: % by mass)]

Measurement was performed by infrared spectroscopy. Specifically, the measurement was performed by the following method. An ethylene-propylene-5-ethylidene-2-norbornene copolymer was molded into a film having a thickness of about 0.5 mm. The intensity of a peak (absorption peak at 1688 $cm^{-1}$) derived from 5-ethylidene-2-norbornene of the obtained film is measured using an infrared spectrophotometer, and the content of a monomer derived from 5-ethylidene-2-norbornene in the copolymer is calculated. Next, an ethylene-propylene-5-ethylidene-2-norbornene copolymer was newly molded into a film having a thickness of about 0.1 mm. An infrared absorption spectrum of the obtained film was measured using an infrared spectrophotometer, and the content of a monomer unit derived from ethylene and the content of a monomer unit derived from propylene were calculated according to a method described in "Characterization of polyethylene by infrared absorption spectrum (written by Takayama, Usami, and others)" or "Die Makromolekulare Chemie, 177, 461 (1976) (written by Mc Rae, M. A., MadamS, W. F., and others)".

[Test for Antimicrobial Activity of plastics]

An antibacterial activity test against Staphylococcus aureus and Escherichia coli was performed in accordance with JIS Z2801. 0.4 mL of a bacterial solution was sown on a test piece (molded article), culturing bacteria was performed for 24 hours from dropping, and the number of bacteria at this time was counted. A common logarithm thereof was evaluated.

[Antifouling test]

A letter was written on a resin molded article with Hi-Mackie Care (Zebra Corporation), and the resin molded article was held in an oven at 60°C for 20 hours. A piece of toilet paper having a size of 11 cm × 15 cm was folded, and sufficiently immersed in water. Thereafter, excess water was removed. The toilet paper was lightly pressed against the letter on the sample after being held, and reciprocated ten times to wipe off the letter. After the letter was wiped off, a case where the letter had not disappeared was evaluated as ×, a case where the letter remained to some extent was evaluated as △, and a case where the letter had almost disappeared or an outline of the letter had disappeared and an ink was slightly spread was evaluated as o.

Component (A): Propylene polymer

(A1-1): Propylene homopolymer, trade name "Sumitomo Noblen D101" manufactured by Sumitomo Chemical Co., Ltd., MFR (230°C, 21.18 N) = 0.5 g/10 min
(A1-2): Propylene homopolymer, trade name "Sumitomo Noblen H501N" manufactured by Sumitomo Chemical Co., Ltd., MFR (230°C, 21.18 N) = 3 g/10 min
(A1-3): Propylene homopolymer, trade name "Sumitomo Noblen R101" manufactured by Sumitomo Chemical Co., Ltd., MFR (230°C, 21.18 N) = 20 g/10 min
(A2-1): Propylene heterophasic polymerization material, trade name "Sumitomo Noblen AZ564" manufactured by Sumitomo Chemical Co., Ltd., MFR (230°C, 21.18 N) = 27 g/10 min, content of propylene homopolymer = 87% by mass, content of copolymer = 13% by mass, content of monomer derived from ethylene in copolymer = 46% by mass
(A3-1): Propylene-ethylene random copolymer, trade name "Sumitomo Noblen AZ144CE4" manufactured by Sumitomo Chemical Co., Ltd., MFR (230°C, 21.18 N) = 28 g/10 min, content of monomer derived from ethylene = 4% by mass

Component (B): Ethylene-based copolymer rubber

(B1 + D1): Mixture of 100 parts by mass of ethylene-propylene-5-ethylidene-2-norbornene copolymer and 100 parts by mass of paraffin-based mineral oil (D1)
Mooney viscosity of (B1) calculated from the above formula (1) ($ML_{1+4}$ 125°C) = 210, content of monomer unit derived from ethylene in (B1) = 66% by mass, content of monomer unit derived from propylene in (B1) = 30% by mass, content of monomer unit derived from 5-ethylidene-2-norbornene in (B1) = 4% by mass
(B2): Ethylene-1-octene copolymer, trade name "Engage 8842" manufactured by The Dow Chemical Company, content of monomer unit derived from ethylene = 59% by mass, content of monomer unit derived from 1-octene = 41% by mass, Mooney viscosity ($ML_{1+4}$ 125°C) = 23, density = 0.857 g/$cm^3$
(B3): Ethylene-1-butene copolymer, trade name "Engage 7487" manufactured by The Dow Chemical Company, content of monomer unit derived from ethylene = 66% by mass, content of monomer unit derived from 1-butene = 34° by mass, Mooney viscosity ($ML_{1+4}$ 125°C) = 47, density = 0.860 g/$cm^3$
(B4): Ethylene-vinyl acetate copolymer, trade name "SUMITATE KA-30" manufactured by Sumitomo Chemical Co., Ltd., MFR (190°C, 21.18 N) = 28 g/10 min, content of monomer derived from ethylene = 72% by mass, content of monomer derived from vinyl acetate = 28% by mass

Component (B'): Copolymer containing monomer unit derived from aromatic vinyl compound and monomer unit derived from conjugated diene compound

(B'1): Trade name "Kraton (registered trademark) G1651HU" manufactured by Kraton Corporation, content of monomer unit derived from styrene = 33% by mass

Component (C): Glycerol fatty acid ester

(C1): Diglycerol monolaurate, trade name "Poem DL-100" manufactured by Riken Vitamin Co., Ltd.
(C2): Monoglycerol monolaurate, trade name "Poem M300" manufactured by Riken Vitamin Co., Ltd.
(C3): Polyglycerol laurate, trade name "SUNSOFT Q-12S" manufactured by Taiyo Kagaku Co., Ltd.
(C4): Monoglycerol monostearate, trade name "Electrostripper TS-5" manufactured by Kao Corporation
(C5): Diglycerol monomyristate, trade name "Poem DM100" manufactured by Riken Vitamin Co., Ltd.
(C6): Monoglycerol monocaprate, trade name "Poem M200" manufactured by Riken Vitamin Co., Ltd.

Component (D): Mineral oil

(D1): Paraffin-based mineral oil, trade name "PW-380" manufactured by Idemitsu Kosan Co., Ltd.

Component (E): Crosslinking agent

(E1): Trade name "APO-10DL" manufactured by Kayaku Akzo Co., Ltd. (obtained by diluting 2,5-dimethy-2,5-di(t-butylperoxy) hexane to 10% with a paraffin-based mineral oil (trade name "PW-100" manufactured by Idemitsu Kosan Co., Ltd.))
(F1): Oleic acid amide, trade name "Denon SL-12" manufactured by Marubishi Oil Chemical Co., Ltd.
(F2): Erucic acid amide: trade name "Neutron S" manufactured by Nippon Fine Chemical Co., Ltd.
(F3): Siloxane polyolefin compound, trade name "TEGOMER(R) AntiScratch 100" manufactured by Evonik Industries.
(F4): Sorbitan monostearate: manufactured by Wako Pure Chemical Industries, Ltd.
(G1): Antioxidant, trade name "IRGANOX (registered trademark) 1010" manufactured by BASF Japan Ltd.
(G2): Antioxidant, trade name "Sumilizer GA80" manufactured by Sumitomo Chemical Co., Ltd.
(H1): Crosslinking aid, trade name "High-Cross MS50" manufactured by Seiko Chemical Co., Ltd. (obtained by diluting trimethylolpropane trimethacrylate to 50% with silicon oxide)

[Comparative Example 1]

20% by mass of (A1-1), 80% by mass of (B1 + D1), 3% by mass of (E1), 0.1% by mass of (F1), 0.1% by mass of (G1), and 0.4% by mass of (H1) were melt-kneaded with a twin-screw kneading extruder ("TEX34", manufactured by The Japan Steel Works, Ltd.) at a cylinder temperature of 200°C to obtain a thermoplastic resin composition. The blending amounts of the components used as the raw materials are illustrated in Table 3.

The obtained thermoplastic resin composition was melt-kneaded with a 100 cc Labo Plastomill (manufactured by Toyo Seiki Seisaku-sho, Ltd.) under conditions of a rotor temperature of 190 ± 10°C, a rotation speed of 80 rpm, and a kneading time of eight minutes. The melt-kneaded thermoplastic resin composition was pressed with a compression molding machine at a temperature of 200°C and a maximum pressure of 10 MPa for five minutes and subjected to cooling press molding for five minutes to obtain a molded article having a length of 160 mm, a width of 160 mm, and a thickness of 1 mm. The molded article was cut into a size of 50 mm in length, 50 mm in width, and 1 mm in thickness. Paper sheets were placed on both sides of the test piece. The test piece with the paper sheets was stored for one month or more. Using the sample from which the paper sheets were removed after storage, an antibacterial activity test was performed for each of Staphylococcus aureus and Escherichia coli according to JIS Z2801. A common logarithmic value of the number of living bacteria 24 hours after the antibacterial activity test is illustrated in Table 3. In addition, an antifouling test was performed using the sample from which the paper sheets were removed after storage.

[Comparative Example 2]

As raw materials, 95% by mass of (A1-2), 5% by mass of (D1), and 2% by mass of (C1) were melt-kneaded with a Labo Plastomill (manufactured by Toyo Seiki Seisaku-sho, Ltd.) under the conditions of a rotor temperature of 190 ± 10°C, a rotation speed of 80 rpm, and a kneading time of eight minutes to obtain a thermoplastic resin composition. The blending amounts of the components used as the raw materials are illustrated in Table 3. The thermoplastic composition was molded with a compression molding machine in a similar manner to Comparative Example 1 except that the temperature of the compression molding machine was set to 220°C. The molded article was sandwiched between paper sheets and stored, and then an antibacterial activity test and an antifouling test were performed. Results thereof are illustrated in Table 3.

[Example 1]

Kneading was performed with a Labo Plastomill and molding was performed with a compression molding machine in a similar manner to Comparative Example 1 except that 100% by mass of the thermoplastic resin composition obtained in Comparative Example 1 and 2% by mass of (C1) were used as raw materials. The molded article was sandwiched between paper sheets and stored, and then an antibacterial activity test and an antifouling test were performed. Results thereof are illustrated in Table 1.

[Example 2]

35% by mass of (A2-1), 20% by mass of (A3-1), 20% by mass of (B2), 25% by mass of (B3), 2% by mass of (E1), 0.1% by mass of (F2), 0.1% by mass of (G2), and 0.5% by mass of (H1) were melt-kneaded with a twin-screw kneading extruder at a cylinder temperature of 200°C to obtain a thermoplastic resin composition. Kneading was performed with a Labo Plastomill and molding was performed with a compression molding machine in a similar manner to Comparative Example 1 except that 100% by mass of the thermoplastic resin composition obtained and 2% by mass of (C1) were used. The molded article was sandwiched between paper sheets and stored, and then an antibacterial activity test and an antifouling test were performed. Results thereof are illustrated in Table 1.

[Example 3]

20% by mass of (A1-3), 35% by mass of (B'1), 45% by mass of (D1), 0.05% by mass of (F2), and 0.1% by mass of (G1) were melt-kneaded with a twin-screw kneading extruder at a cylinder temperature of 200°C to obtain a thermoplastic resin composition. Kneading was performed with a Labo Plastomill and molding was performed with a compression molding machine in a similar manner to Comparative Example 1 except that 100% by mass of the thermoplastic resin composition obtained and 2% by mass of (C1) were used. The molded article was sandwiched between paper sheets and stored, and then an antibacterial activity test and an antifouling test were performed. Results thereof are illustrated in Table 1.

[Example 4]

Kneading was performed with a Labo Plastomill and molding was performed with a compression molding machine in a similar manner to Comparative Example 1 except that 100% by mass of the thermoplastic resin composition obtained in Comparative Example 1 and 1% by mass of (C1) were used as raw materials. The molded article was sandwiched between paper sheets and stored, and then an antibacterial activity test and an antifouling test were performed. Results thereof are illustrated in Table 1.

[Example 5]

As raw materials, 20% by mass of (A1-1), 80% by mass of (B1 + D1), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 6]

As raw materials, 20% by mass of (A1-1), 80% by mass of (B1 + D1), and 2% by mass of (C1) were melt-kneaded with a Labo Plastomill under the conditions of a rotor temperature of 190 ± 10°C, a rotation speed of 80 rpm, and a kneading time of eight minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 7]

As raw materials, 20% by mass of (A1-1), 80% by mass of (B1 + D1), 3% by mass of (E1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 8]

As raw materials, 20% by mass of (A1-1), 80% by mass of (B1 + D1), 2% by mass of (C1), and 0.1% by mass of (F1) were melt-kneaded with a Labo Plastomill under the conditions of a rotor temperature of 190 ± 10°C, a rotation speed of 80 rpm, and a kneading time of eight minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 9]

As raw materials, 20% by mass of (A1-1), 80% by mass of (B1 + D1), 2% by mass of (C1), 0.1% by mass of (F1), and 0.1% by mass of (G1) were melt-kneaded with a Labo Plastomill under the conditions of a rotor temperature of 190 ± 10°C, a rotation speed of 80 rpm, and a kneading time of eight minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 10]

As raw materials, 20% by mass of (A1-1), 80% by mass of (B1 + D1), 3% by mass of (E1), 0.1% by mass of (F1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was further added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 1.

[Example 11]

As raw materials, 20% by mass of (A1-1), 80% by mass of (B1 + D1), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C2) was further added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 12]

As raw materials, 20% by mass of (A1-1), 80% by mass of (B1 + D1), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C3) was further added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 13]

As raw materials, 20% by mass of (A1-1), 80% by mass of (B1 + D1), 3% by mass of (E1), 0.1% by mass of (F2), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 14]

As raw materials, 20% by mass of (A1-1), 80% by mass of (B1 + D1), 3% by mass of (E1), 0.7% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 15]

As raw materials, 20% by mass of (A1-1), 80% by mass of (B1 + D1), 3% by mass of (E1), 0.1% by mass of (F3), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 16]

Kneading was performed with a Labo Plastomill and molding was performed with a compression molding machine in a similar manner to Comparative Example 1 except that 100% by mass of the thermoplastic resin composition obtained in Comparative Example 1 and 0.5% by mass of (C1) were used as raw materials. The molded article was sandwiched between paper sheets and stored, and then an antibacterial activity test and an antifouling test were performed. Results thereof are illustrated in Table 2.

[Example 17]

Kneading was performed with a Labo Plastomill and molding was performed with a compression molding machine in a similar manner to Comparative Example 1 except that 10% by mass of the thermoplastic resin composition obtained in Example 16 and 90% by mass of the thermoplastic resin composition obtained in Comparative Example 1 were used as raw materials. The molded article was sandwiched between paper sheets and stored, and then an antibacterial activity test and an antifouling test were performed. Results thereof are illustrated in Table 2.

[Example 18]

As raw materials, 60% by mass of (A3-1), 40% by mass of (B2), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 19]

As raw materials, 20% by mass of (A1-1), 80% by mass of (B1 + D1), 2% by mass of (C1), and 0.1% by mass of (G1) were melt-kneaded with a Labo Plastomill under the conditions of a rotor temperature of 190 ± 10°C, a rotation speed of 80 rpm, and a kneading time of eight minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 20]

As raw materials, 20% by mass of (A1-1), 80% by mass of (B1 + D1), 3% by mass of (E1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 2.

[Example 21]

As raw materials, 20% by mass of (A1-1), 80% by mass of (B1 + D1), 3% by mass of (E1), 0.1% by mass of (F4), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C1) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 3.

[Example 22]

As raw materials, 20% by mass of (A1-1), 80% by mass of (B1 + D1), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C5) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 3.

[Example 23]

As raw materials, 20% by mass of (A1-1), 80% by mass of (B1 + D1), 3% by mass of (E1), 0.1% by mass of (F1), 0.1% by mass of (G1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C6) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 3.

[Example 24]

As raw materials, 80% by mass of (A1-1), 20% by mass of (B4), 2% by mass of (C1), 0.1% by mass of (F1), and 0.1% by mass of (G1) were melt-kneaded with a Labo Plastomill under the conditions of a rotor temperature of 190 ± 10°C, a rotation speed of 80 rpm, and a kneading time of eight minutes to obtain a thermoplastic resin composition. The thermoplastic composition was molded with a compression molding machine in a similar manner to Comparative Example 1 except that the temperature of the compression molding machine was set to 220°C. The molded article was sandwiched between paper sheets and stored, and then an antibacterial activity test and an antifouling test were performed. Results thereof are illustrated in Table 3.

[Comparative Example 3]

As raw materials, 100% by mass of (Al-1) and 2% by mass of (C1) were melt-kneaded with a 100 cc Labo Plastomill (manufactured by Toyo Seiki Seisaku-sho, Ltd.) under the conditions of a rotor temperature of 190 ± 10°C, a rotation speed of 80 rpm, and a kneading time of eight minutes to obtain a thermoplastic resin composition. The blending amounts of the components used as the raw materials are illustrated in Table 3. The thermoplastic composition was molded with a compression molding machine in a similar manner to Comparative Example 1 except that the temperature of the compression molding machine was set to 220°C. The molded article was sandwiched between paper sheets and stored, and then an antibacterial activity test and an antifouling test were performed. Results thereof are illustrated in Table 3.

[Comparative Example 4]

As raw materials, 95% by mass of (A1-1), 5% by mass of (D1), and 2% by mass of (C1) were melt-kneaded with a 100 cc Labo Plastomill (manufactured by Toyo Seiki Seisaku-sho, Ltd.) under the conditions of a rotor temperature of 190 ± 10°C, a rotation speed of 80 rpm, and a kneading time of eight minutes to obtain a thermoplastic resin composition. The blending amounts of the components used as the raw materials are illustrated in Table 3. The thermoplastic composition was molded with a compression molding machine in a similar manner to Comparative Example 1 except that the temperature of the compression molding machine was set to 220°C. The molded article was sandwiched between paper sheets and stored, and then an antibacterial activity test and an antifouling test were performed. Results thereof are illustrated in Table 3.

[Comparative Example 5]

As raw materials, 20% by mass of (A1-1), 80% by mass of (B1 + D1), 3% by mass of (E1), and 0.4% by mass of (H1) were melt-kneaded with a Labo Plastomill under the conditions of a rotor temperature of 190 ± 10°C, a rotation speed of 80 rpm, and a kneading time of four minutes. Thereafter, 2% by mass of (C4) was added thereto, and the mixture was further melt-kneaded under a condition of a kneading time of five minutes to obtain a thermoplastic resin composition. The thermoplastic composition was molded with a compression molding machine in a similar manner to Comparative Example 1. The molded article was sandwiched between paper sheets and stored, and then an antibacterial activity test and an antifouling test were performed. Results thereof are illustrated in Table 3.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Blending amount (With respect to 100 parts by mass of A + B + B') | A1-1 | 33.3 | - | - | 33.3 | 33.3 | 33.3 | 33.3 | 33.3 | 33.3 | 33.3 |
| | A1-2 | - | - | - | - | - | - | - | - | - | - |
| | A1-3 | - | - | 36.4 | - | - | - | - | - | - | - |
| | A2-1 | - | 35.0 | - | - | - | - | - | - | - | - |
| | A3-1 | - | 20.0 | - | - | - | - | - | - | - | - |
| | B1 | 66.7 | - | - | 66.7 | 66.7 | 66.7 | 66.7 | 66.7 | 66.7 | 66.7 |
| | B2 | - | 20.0 | - | - | - | - | - | - | - | - |
| | B3 | - | 25.0 | - | - | - | - | - | - | - | - |
| | B4 | - | - | - | - | - | - | - | - | - | - |
| | B'1 | - | - | 63.6 | - | - | - | - | - | - | - |
| | (B + B')/(A1 + A2 + B + B') | 0.67 | 0.56 | 0.64 | 0.67 | 0.67 | 0.67 | 0.67 | 0.67 | 0.67 | 0.67 |
| Blending amount (With respect to 100% by mass of A + B + B' +D) | A1-1 | 20 | - | - | 20 | 20 | 20 | 20 | 20 | 20 | 20 |
| | A1-2 | - | - | - | - | - | - | - | - | - | - |
| | A1-3 | - | - | 20 | - | - | - | - | - | - | - |
| | A2-1 | - | 35 | - | - | - | - | - | - | - | - |
| | A3-1 | - | 20 | - | - | - | - | - | - | - | - |
| | B1 | 40 | - | - | 40 | 40 | 40 | 40 | 40 | 40 | 40 |
| | B2 | - | 20 | - | - | - | - | - | - | - | - |
| | B3 | - | 25 | - | - | - | - | - | - | - | - |
| | B4 | - | - | - | - | - | - | - | - | - | - |
| | B'1 | - | - | 35 | - | - | - | - | - | - | - |
| | D1 | 40 | - | 45 | 40 | 40 | 40 | 40 | 40 | 40 | 40 |
| | C1 | 2 | 2 | 2 | 1 | 2 | 2 | 2 | 2 | 2 | 2 |
| | C2 | - | - | - | - | - | - | - | - | - | - |
| | C3 | - | - | - | - | - | - | - | - | - | - |
| | C4 | - | - | - | - | - | - | - | - | - | - |
| | C5 | - | - | - | - | - | - | - | - | - | - |
| | C6 | - | - | - | - | - | - | - | - | - | - |
| | E1 | 3 | 2 | - | 3 | 3 | - | 3 | - | - | 3 |
| | F1 | 0.1 | - | - | 0.1 | 0.1 | - | - | 0.1 | 0.1 | 0.1 |
| | F2 | - | 0.1 | 0.05 | - | - | - | - | - | - | - |
| | F3 | - | - | - | - | - | - | - | - | - | - |
| | F4 | - | - | - | - | - | - | - | - | - | - |
| | G1 | 0.1 | - | 0.1 | 0.1 | 0.1 | - | - | - | 0.1 | - |
| | G2 | - | 0.1 | - | - | - | - | - | - | - | - |
| | H1 | 0.4 | 0.5 | - | 0.4 | 0.4 | - | 0.4 | - | - | 0.4 |
| Kneading method | Kneading method other than kneading method for component (C) | TEX | TEX | TEX | TEX | Labo | Labo | Labo | Labo | Labo | Labo |
| | Kneading method for component (C) | Labo | Labo | Labo | Labo | Labo | Labo | Labo | Labo | Labo | Labo |
| Evaluation results | Antibacterial activity test for Staphylococcus aureus Common logarithmic value of the number of living bacteria | <-0.20 | <-0.20 | <-0.20 | <-0.20 | <-0.20 | 0.29 | <-0.20 | 0.19 | 0.40 | 0.03 |
| | Antibacterial activity test for Escherichia coli Common logarithmic value of the number of living bacteria | 2.02 | -0.20 | 2.15 | 5.67 | 0.73 | 6.07 | 5.71 | 5.74 | 5.24 | 5.80 |
| | Antifouling test results | ○ | ○ | ○ | ○ | ○ | ○ to △ | ○ | ○ | ○ | ○ to △ |

[Table 2]

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Blending amount (With respect to 100 parts by mass of A + B + B' ) | A1-1 | 33.3 | 33.3 | 33.3 | 33.3 | 33.3 | 33.3 | 33.3 | - | 33.3 | 33.3 |
| | A1-2 | - | - | - | - | - | - | - | - | - | - |
| | A1-3 | - | - | - | - | - | - | - | - | - | - |
| | A2-1 | - | - | - | - | - | - | - | - | - | - |
| | A3-1 | - | - | - | - | - | - | - | 60.0 | - | - |
| | B1 | 66.7 | 66.7 | 66.7 | 66.7 | 66.7 | 66.7 | 66.7 | - | 66.7 | 66.7 |
| | B2 | - | - | - | - | - | - | - | 40.0 | - | - |
| | B3 | - | - | - | - | - | - | - | - | - | - |
| | B4 | - | - | - | - | - | - | - | - | - | - |
| | B'1 | - | - | - | - | - | - | - | - | - | - |
| | (B + B')/(A1 + A2 + B + B') | 0.67 | 0.67 | 0.67 | 0.67 | 0.67 | 0.67 | 0.67 | 1.00 | 0.67 | 0.67 |
| Blending amount (With respect to 100% by mass of A + B + B' +D) | A1-1 | 20 | 20 | 20 | 20 | 20 | 20 | 20 | - | 20 | 20 |
| | A1-2 | - | - | - | - | - | - | - | - | - | - |
| | A1-3 | - | - | - | - | - | - | - | - | - | - |
| | A2-1 | - | - | - | - | - | - | - | - | - | - |
| | A3-1 | - | - | - | - | - | - | - | 60 | - | - |
| | B1 | 40 | 40 | 40 | 40 | 40 | 40 | 40 | - | 40 | 40 |
| | B2 | - | - | - | - | - | - | - | 40 | - | - |
| | B3 | - | - | - | - | - | - | - | - | - | - |
| | B4 | - | - | - | - | - | - | - | - | - | - |
| | B'1 | - | - | - | - | - | - | - | - | - | - |
| | D1 | 40 | 40 | 40 | 40 | 40 | 40 | 40 | - | 40 | 40 |
| | C1 | - | - | 2 | 2 | 2 | 0.5 | 0.05 | 2 | 2 | 2 |
| | C2 | 2 | - | - | - | - | - | - | - | - | - |
| | C3 | - | 2 | - | - | - | - | - | - | - | - |
| | C4 | - | - | - | - | - | - | - | - | - | - |
| | C5 | - | - | - | - | - | - | - | - | - | - |
| | C6 | - | - | - | - | - | - | - | - | - | - |
| | E1 | 3 | 3 | 3 | 3 | 3 | 3 | 3 | 3 | - | 3 |
| | F1 | 0.1 | 0.1 | - | 0.7 | - | 0.1 | 0.1 | 0.1 | - | - |
| | F2 | - | - | 0.1 | - | - | - | - | - | - | - |
| | F3 | - | - | - | - | 0.1 | - | - | - | - | - |
| | F4 | - | - | - | - | - | - | - | - | - | - |
| | G1 | 0.1 | 0.1 | 0.1 | 0.1 | 0.1 | 0.1 | 0.1 | 0.1 | 0.1 | 0.1 |
| | G2 | - | - | - | - | - | - | - | - | - | - |
| | H1 | 0.4 | 0.4 | 0.4 | 0.4 | 0.4 | 0.4 | 0.4 | 0.4 | - | 0.4 |
| Kneading method | Kneading method other than kneading method for component (C) | Labo | Labo | Labo | Labo | Labo | TEX | TEX | Labo | Labo | Labo |
| | Kneading method for component (C) | Labo | Labo | Labo | Labo | Labo | Labo | Labo | Labo | Labo | Labo |
| Evaluation results | Antibacterial activity test for Staphylococcus aureus*1 | <-0.2 | <-0.2 | - | <-0.2 | <-0.2 | <-0.20 | -0.20 | -0.20 | 1.13 | <-0.2 |
| | Antibacterial activity test for Escherichia coli *2 | -0.10 | 4.38 | 5.22 | 4.98 | 5.51 | 5.69 | - | 5.89 | 3.77 | 5.10 |
| | Antifouling test results | ○ to △ | ○ | ○ | ○ to △ | ○ | ○ | ○ | ○ to △ | ○ | ○ |

*1:Antibacterial activity test for Staphylococcus aureus Common logarithmic value of the number of living bacteria

*2:Antibacterial activity test for Escherichia coli Common logarithmic value of the number of living bacteria

[Table 3]

| | | Example 21 | Example 22 | Example 23 | Example 24 | Comparative Example 1 | Comparative Example 2 | Comparative Example 3 | Comparative Example 4 | Comparative Example 5 |
|---|---|---|---|---|---|---|---|---|---|---|
| Blending amount (With respect to 100 parts by mass of A + B + B') | A1-1 | 33.3 | 33.3 | 33.3 | 80.0 | 33.3 | - | 100.0 | 100.0 | 33.3 |
| | A1-2 | - | - | - | - | - | 100.0 | - | - | - |
| | A1-3 | - | - | - | - | - | - | - | - | - |
| | A2-1 | - | - | - | - | - | - | - | - | - |
| | A3-1 | - | - | - | - | - | - | - | - | - |
| | B1 | 66.7 | 66.7 | 66.7 | - | 66.7 | - | - | - | 66.7 |
| | B2 | - | - | - | - | - | - | - | - | - |
| | B3 | - | - | - | - | - | - | - | - | - |
| | B4 | - | - | - | 20.0 | - | - | - | - | - |
| | B'1 | - | - | - | - | - | - | - | - | - |
| | (B + B')/(A1 + A2 + B + B') | 0.67 | 0.67 | 0.67 | 0.20 | 0.67 | 0 | 0 | 0 | 0.67 |
| Blending amount (With respect to 100% by mass of A + B + B' +D) | A1-1 | 20 | 20 | 20 | 80 | 20 | - | 100 | 95 | 20 |
| | A1-2 | - | - | - | - | - | 95 | - | - | - |
| | A1-3 | - | - | - | - | - | - | - | - | - |
| | A2-1 | - | - | - | - | - | - | - | - | - |
| | A3-1 | - | - | - | - | - | - | - | - | - |
| | B1 | 40 | 40 | 40 | - | 40 | - | - | - | 40 |
| | B2 | - | - | - | - | - | - | - | - | - |
| | B3 | - | - | - | - | - | - | - | - | - |
| | B4 | - | - | - | 20 | - | - | - | - | - |
| | B'1 | - | - | - | - | - | - | - | - | - |
| | D1 | 40 | 40 | 40 | - | 40 | 5 | - | 5 | 40 |
| | C1 | 2 | - | - | 2 | - | 2 | 2 | 2 | - |
| | C2 | - | - | - | - | - | - | - | - | - |
| | C3 | - | - | - | - | - | - | - | - | - |
| | C4 | - | - | - | - | - | - | - | - | 2 |
| | C5 | - | 2 | - | - | - | - | - | - | - |
| | C6 | - | - | 2 | - | - | - | - | - | - |
| | E1 | 3 | 3 | 3 | - | 3 | - | - | - | 3 |
| | F1 | - | 0.1 | 0.1 | 0.1 | 0.1 | - | - | - | - |
| | F2 | - | - | - | - | - | - | - | - | - |
| | F3 | - | - | - | - | - | - | - | - | - |
| | F4 | 0.1 | - | - | - | - | - | - | - | - |
| | G1 | 0.1 | 0.1 | 0.1 | 0.1 | 0.1 | - | - | - | - |
| | G2 | - | - | - | - | - | - | - | - | - |
| | H1 | 0.4 | 0.4 | 0.4 | - | 0.4 | - | - | - | 0.4 |
| Kneading method | Kneading method other than kneading method for component (C) | Labo | Labo | Labo | Labo | TEX | Labo | Labo | Labo | Labo |
| | Kneading method for component (C) | Labo | Labo | Labo | Labo | - | Labo | Labo | Labo | Labo |
| Evaluation results | Antibacterial activity test for Staphylococcus aureus *1 | 1.15 | <-0.2 | <-0.2 | 2.49 | 3.98 | 0.57 | <-0.20 | <-0.20 | 4.04 |
| | Antibacterial activity test for Escherichia coli *2 | 5.84 | 5.73 | -0.20 | 4.00 | 5.89 | 5.90 | 6.13 | 6.04 | 6.08 |
| | Antifouling test results | ○ | ○ | ○ to △ | ○ | △ | × | × | × | × |

*1:Antibacterial activity test for Staphylococcus aureus Common logarithmic value of the number of living bacteria

*2:Antibacterial activity test for Escherichia coli Common logarithmic value of the number of living bacteria

As can be seen from the results in Table 1 to 3, the molded articles obtained from the thermoplastic resin compositions of Examples that satisfy all the constituent requirements of the present invention each have an antifouling property and exhibit good antibacterial activity against Staphylococcus aureus and Escherichia coli.

## Claims

**1.** A thermoplastic resin composition comprising:

5 to 95 parts by mass of a propylene resin (A);
5 to 95 parts by mass of at least one selected from the group consisting of an ethylene-based copolymer rubber (B) and a copolymer (B') containing a monomer unit derived from an aromatic vinyl compound and a monomer unit derived from a conjugated diene compound, provided that a total amount of the propylene resin (A), the ethylene-based copolymer rubber (B), and the copolymer (B') is 100 parts by mass; and
a glycerol fatty acid ester (C), wherein
(C) is an ester of a fatty acid having 8 to 14 carbon atoms.

**2.** The thermoplastic resin composition according to claim 1, wherein

the propylene resin (A) is at least one selected from the group consisting of a propylene homopolymer, a heterophasic polymerization material, and a propylene random copolymer, and
when a content of the propylene resin (A) is A parts by mass, a content of the ethylene-based copolymer rubber (B) is B parts by mass, a content of the copolymer (B') is B' parts by mass, a content of the propylene homopolymer is A1 parts by mass, a content of the heterophasic polymerization material is A2 parts by mass, and A + B + B' is 100 parts by mass,

$$(B + B')/(A1 + A2 + B + B') \text{ is } 0.51 \text{ to } 1.0.$$

**3.** The thermoplastic resin composition according to claim 1 or 2, further comprising a mineral oil (D).

**4.** The thermoplastic resin composition according to claim 3, wherein a content of (D) is 0.1% by mass or more and 60% by mass or less with respect to 100% by mass of a total amount of the propylene resin (A), the ethylene-based copolymer rubber (B), the copolymer (B'), and the mineral oil (D).

**5.** The thermoplastic resin composition according to any one of claims 1 to 4, further comprising an antioxidant (G) .

**6.** The thermoplastic resin composition according to any one of claims 1 to 5, further comprising a crosslinking agent (E).

**7.** The thermoplastic resin composition according to any one of claims 1 to 6, further comprising a lubricant (F) .

**8.** The thermoplastic resin composition according to claim 7, wherein (F) is a fatty acid amide.

**9.** The thermoplastic resin composition according to any one of claims 1 to 8, wherein a content of (C) is 0.1% by mass or more and 10% by mass or less with respect to 100% by mass of a total amount of the propylene resin (A), the ethylene-based copolymer rubber (B), the copolymer (B'), and the mineral oil (D).

**10.** The thermoplastic resin composition according to any one of claims 1 to 9, wherein (C) is a diglycerol fatty acid ester.

**11.** The thermoplastic resin composition according to claim 10, wherein (C) is a diglycerol monofatty acid ester.

**12.** A molded article comprising the thermoplastic resin composition according to any one of claims 1 to 11.

**INTERNATIONAL SEARCH REPORT**

International application No.
**PCT/JP2021/047859**

**A. CLASSIFICATION OF SUBJECT MATTER**

***C08L 23/10***(2006.01)i; ***C08K 5/103***(2006.01)i; ***C08L 23/08***(2006.01)i; ***C08L 25/10***(2006.01)i
FI: C08L23/10; C08L23/08; C08L25/10; C08K5/103

According to International Patent Classification (IPC) or to both national classification and IPC

**B. FIELDS SEARCHED**

Minimum documentation searched (classification system followed by classification symbols)

C08L23/10; C08K5/103; C08L23/08; C08L25/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 111500076 A (NANJING JINGJINYUAN TECHNICAL INDUSTRY CO., LTD.) 07 August 2020 (2020-08-07) claims, examples | 1-5, 7, 9, 12 |
| X | JP 2007-284071 A (UNIVERSAL SEIKAN KK) 01 November 2007 (2007-11-01) claims, examples | 1-4, 7-9, 12 |
| X | CN 106366458 A (RUAN, Lili) 01 February 2017 (2017-02-01) claims, examples | 1-2, 12 |
| A | JP 2007-144741 A (ASAHI KASEI LIFE & LIVING CORP) 14 June 2007 (2007-06-14) claims, examples | 1-12 |
| A | JP 2000-086811 A (RIKEN VITAMIN CO LTD) 28 March 2000 (2000-03-28) claims, examples | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/047859**

| Patent document cited in search report | Publication date (day/month/year) | Patent family member(s) | Publication date (day/month/year) |
|---|---|---|---|
| CN 111500076 A | 07 August 2020 | (Family: none) | |
| JP 2007-284071 A | 01 November 2007 | (Family: none) | |
| CN 106366458 A | 01 February 2017 | (Family: none) | |
| JP 2007-144741 A | 14 June 2007 | (Family: none) | |
| JP 2000-086811 A | 28 March 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003176384 A
- JP 61218606 A
- JP 61287904 A
- JP 5194685 A
- JP 7216017 A
- JP 9316147 A
- JP 10212319 A
- JP 2004182981 A
- JP 4023798 B
- JP 428704 B
- JP 436636 B
- JP 59133203 A
- JP 60079005 A


### Non-patent literature cited in the description


- **TAKAYAMA ; USAMI.** *Characterization of polyethylene by infrared absorption spectrum*
- **MC RAE, M. A. ; MADAMS, W. F.** *Die Makromolekulare Chemie,* 1976, vol. 177, 461
- Polymer solution, Polymer Experiment 11. KYORITSU SHUPPAN CO., LTD, 1982, 491